# EUROPEAN PATENT APPLICATION

(11) **EP 2 939 777 A1**
(43) Date of publication of application: **04.11.2015**
(21) Application number: 14166226.2
(22) Date of filing: 28.04.2014
(51) Int. Cl.: B23D 57/00

(54) **Pulley for a wire saw device**

(71) Applicant: Applied Materials Switzerland Sàrl, 1033 Cheseaux-sur-Lausanne (CH)
(72) Inventor: Soubielle, Sebastien, 1032 Romanel-sur-Lausanne (CH)
(74) Representative: Zimmermann & Partner Patentanwälte mbB

(57) **Abstract**

A pulley configured for a wire saw device having a wire forming a wire web is described. The pulley includes a wheel portion (410) around the pulley axis (410a), and a wire guiding portion (455) radially outward of the wheel portion for guiding a wire. The radial stiffness of the wheel portion is lower than the stiffness of the wheel portion in direction of the pulley axis.

## Description

### FIELD OF THE DISCLOSURE

Embodiments of the present disclosure relate to a pulley for and in a wire saw device, and a wire saw device. More particularly, embodiments of the present disclosure relate to a pulley configured for a wire saw device, and a wire saw device for cutting or sawing hard materials such as blocks of silicon, sapphire or quartz, e.g., for cutting silicon wafers, for a squarer, for a cropper or the like.

### BACKGROUND OF THE DISCLOSURE

There exists wire saw devices for cutting blocks or bricks, thin slices, e.g. semiconductor wafers, from a piece of hard material such as silicon. In such devices a stretched wire is fed from a spool and is both guided and tensioned by pulleys for guiding the wire in the cutting area.

Today, there is a tendency to use thinner wires in order to reduce the thickness of the cut and to decrease the material wasted. There is also a desire to use diamond wires. These thinner wires and diamond wires are more susceptible to damage, and under high strain the wires may break more easily. Further, wafer quality is directly linked to the cutting wire tension. The higher the wire tension, the better the cutting and wafer quality. Therefore, the tendency to use thinner wires poses challenges with respect to the control of the wire tension during cutting.

Further, there is a desire to increase the cutting speed for improving the throughput of wire saw devices. The maximum speed for moving the piece through the web, and also the maximum effective cutting area within a given amount of time is limited by several factors including wire speed, hardness of the material to be sawed, disturbing influences, desired precision, and the like. Further, the tendency to employ wire motion profiles having high accelerations and decelerations, for example back-and-forth movements of the cutting wire, adds to the challenges with respect to wire tension control during cutting because such accelerations and decelerations generate disturbances in the wire tension. Accordingly, there is a desire to reduce disturbances in the wire tension of the wire employed in a wire saw.

### SUMMARY

In view of the above, a pulley configured for a wire saw device, particularly for cutting semiconductor material, having a wire forming a wire web and a wire saw device according to the independent claims are provided. Further advantages, features, aspects and details are apparent from the dependent claims, the description and drawings.

According to one embodiment, a pulley configured for a wire saw device having a wire forming a wire web is provided. The pulley includes a wheel portion around the pulley axis, and a wire guiding portion radially outward of the pulley for guiding a wire, wherein the radial stiffness of the wheel portion is lower than the stiffness of the wheel portion in direction of the pulley axis.

According to a further embodiment, a wire saw device for cutting semiconductor material having a wire forming a wire web is provided. The wire saw device at least one pulley according to embodiments described herein.

According to a further aspect, a use of a pulley according to embodiments described herein in a wire saw device is provided.

According to a further embodiment, a pulley configured for a wire saw device for cutting semiconductor material having a wire forming a wire web is provided. The pulley includes a wheel portion around the pulley axis, and a wire guiding portion radially outward of the pulley for guiding a wire, wherein the radial stiffness of the wheel portion is lower than the stiffness of the wheel portion in direction of the pulley axis. The wheel portion includes a structure configured for providing the lower radial stiffness which is arranged at a radially outer portion of the wheel portion. The structure configured for providing the lower radial stiffness is an integral part of the pulley, particularly of the wheel portion. Further, the structure for providing the lower radial stiffness is at least one structure selected from the group consisting of: an S-type structure, a U-type structure, a O-type structure or a foam-like structure. The pulley is made of a plastic material, particularly a thermoplastic or thermoplastic elastomer.

Furthermore, embodiments according to the disclosure are also directed at methods by which the described apparatus operates. It includes method steps for carrying out every function of the apparatus.

### BRIEF DESCRIPTION OF THE DRAWINGS

So that the manner in which the above recited features of the present disclosure can be understood in detail, a more particular description of the disclosure, briefly summarized above, may be had by reference to embodiments. The accompanying drawings relate to embodiments of the disclosure and are described in the following:
- FIG. 1A: shows a schematic view of a pulley according to embodiments described herein;
- FIG. 1B: shows a schematic cross-sectional view of a pulley according to embodiments described herein along line A-A as depicted in FIG. 1A;
- FIG. 2: shows a schematic cross-sectional view of a pulley according to embodiments described herein;
- FIG. 3: shows a schematic cross-sectional view of a pulley according to embodiments described herein;
- FIG. 4: shows a schematic cross-sectional view of a pulley according to embodiments described herein;
- FIG. 5: shows a schematic cross-sectional view of a pulley according to embodiments described herein;
- FIG. 6: shows schematic view of a pulley according to embodiments described herein in a state in which a wire exerts a radial force on the pulley;
- FIG. 7: shows schematic view of a pulley according to embodiments described herein;
- FIG. 8: shows a schematic view of a wire saw device according to embodiments described herein; and
- FIG. 9: shows a perspective view of a wire management system of a wire saw device according to embodiments described herein.

### DETAILED DESCRIPTION OF THE DISCLOSURE

Reference will now be made in detail to the various embodiments of the disclosure, one or more examples of which are illustrated in the figures. Within the following description of the drawings, the same reference numbers refer to same components. In the following, only the differences with respect to individual embodiments are described. Each example is provided by way of explanation of the disclosure and is not meant as a limitation of the disclosure. Further, features illustrated or described as part of one embodiment can be used on or in conjunction with other embodiments to yield a further embodiment. It is intended that the description includes such modifications and variations.

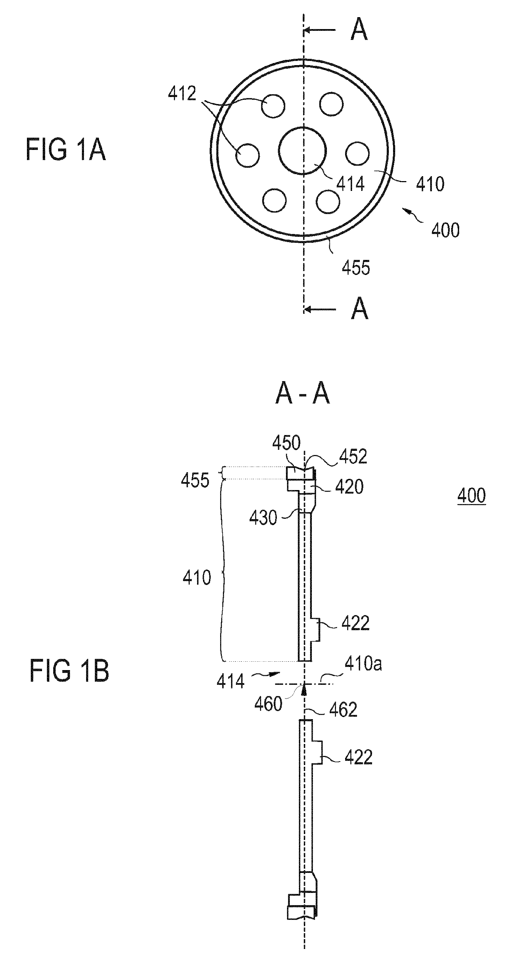

In FIGS. 1A and 1B a schematic view and a cross-sectional view of a pulley according to embodiments described herein is shown. The pulley 400 includes a wheel portion 410 around the pulley axis 410a, and a wire guiding portion 455 at a radially outer portion of the pulley for guiding a wire. Further, the radial stiffness of the wheel portion is lower than the stiffness of the wheel portion in direction of the pulley axis. With exemplary reference to Fig. 1B, the lower radial stiffness of the wheel portion may for example be realized by a structure 430 configured for providing the lower radial stiffness. Such a structure can for example be arranged at a radially outer portion of the wheel portion 410, as exemplarily shown in Fig 1B. According to embodiments described herein the structure 430 configured for providing the lower radial stiffness can be a geometrical structure (e.g. S-type, U-type, or O-type), a material structure (e.g. a foam-like structure), or a structure including a material having a lower stiffness than the remaining part of the pulley, particularly the wheel portion of the pulley.

In the present disclosure, stiffness is to be understood as a measure of the resistance offered by an elastic body to deformation. According to embodiments described herein, stiffness of a body, for example a pulley, is defined as k = F/δ, wherein F is the force applied on the body and δ is the deformation displacement, for example compression or stretching of the body, produced by the force.

According to embodiments which can be combined with other embodiments described herein, the pulley can include a wheel portion 410 having a bearing receiving portion 414. The bearing receiving portion 414 can be adapted for receiving a bearing that can be used at 2000 rpm and more, or even 3000 rpm or more, e.g., 2000 rpm to 4000 rpm. According to some embodiments, as exemplarily shown in in FIG. 1A, openings 412 can be provided in the wheel portion 410 such that for example a spoke structure is provided in the wheel portion. This can further decrease the weight and thus the moment of inertia of the pulley 400.

As shown in Fig. 1B, according to embodiments described herein, the wire guiding portion 455 may include a tire 450, which can be a separate component. For example, the tire 450 can be mounted on a radially outward wheel portion. Further, the tire 450 may be detachably connectable to the wheel portion 410. According to embodiments which can be combined with other embodiments described herein, the tire 450 provides a wire guiding portion of the pulley, including one or more grooves for guiding the wire.

As exemplary shown in FIG. 1B, according to embodiments the wheel portion 410 is configured to rotate around the pulley axis 410a. The wheel portion may include a tire carrying portion 420. As shown in FIG. 1B, a groove 452 can be provided in the wire guiding portion 455, particularly in the tire 450, for guiding the wire on the pulley 400. According to embodiments described herein, the groove 452 defines a plane 462 which is indicated by the dotted line in FIG. 1B. During rotation of the pulley the wire is guided in this plane 462. Therefore, in the present disclosure, that plane 462 may also be referred to as wire guiding plane.

According to some embodiments, which can be combined with other embodiments described herein, the structure 430 configured for providing the lower radial stiffness of the wheel portion 410 of the pulley may be an integral part of the pulley 400. For example, the structure 430 configured for providing the lower radial stiffness can be an integral part of the outer wheel portion as exemplarily shown in Fig. 1B. Further, according to some embodiments, which can be combined with other embodiments described herein, the tire carrying portion 420 may be an integral part of the wheel portion. In the present disclosure, the term "being an integral part of" is to be understood as a description for a "one-piece structure". According to embodiments described herein, such a one-piece structure can for example be obtained by injection molding.

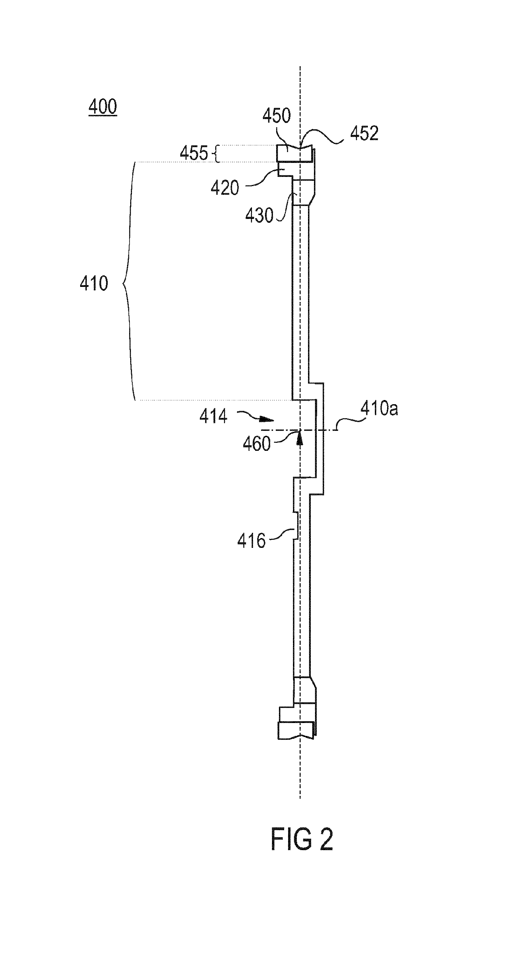

According to embodiments described herein, the structure configured for providing the lower radial stiffness of the wheel portion of the pulley compared to the axial stiffness of the wheel portion of the pulley is at least one structure selected from the group consisting of: an S-type structure, a U-type structure, an O-type structure or a foam-like structure. As exemplarily shown in Fig. 2, the structure configured for providing the lower radial stiffness of the wheel portion may be an integral part of the wheel portion 410, wherein said structure 430 includes lower radial stiffness compared to the axial stiffness of the wheel portion. For example, the structure 430 may include a material having a lower stiffness than the remaining part of the wheel portion of the pulley. Additionally or alternatively, the structure 430 may include a foam-like structure configured for providing a lower radial stiffness of the wheel portion.

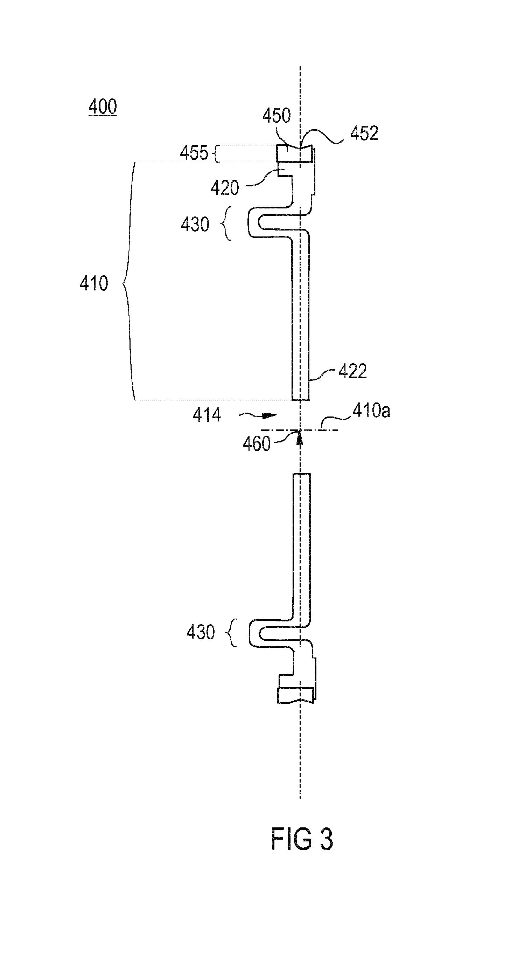

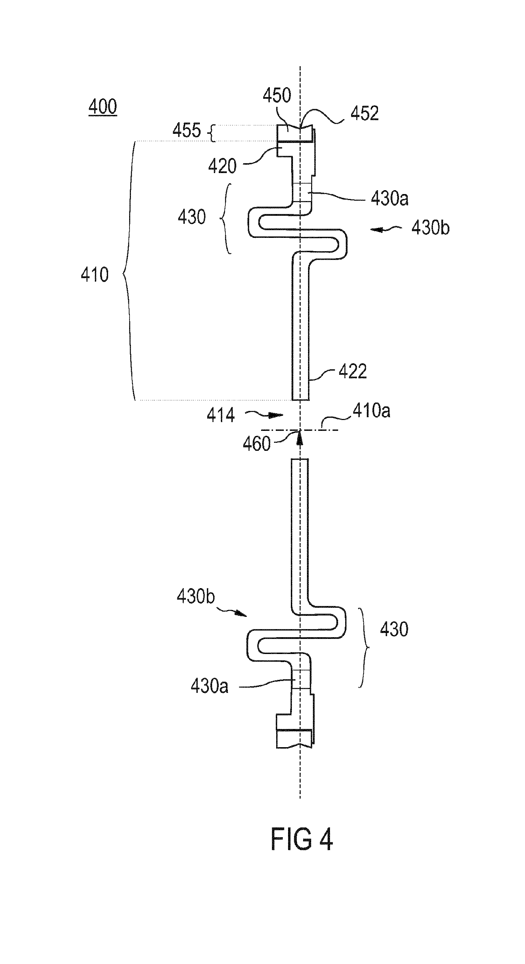

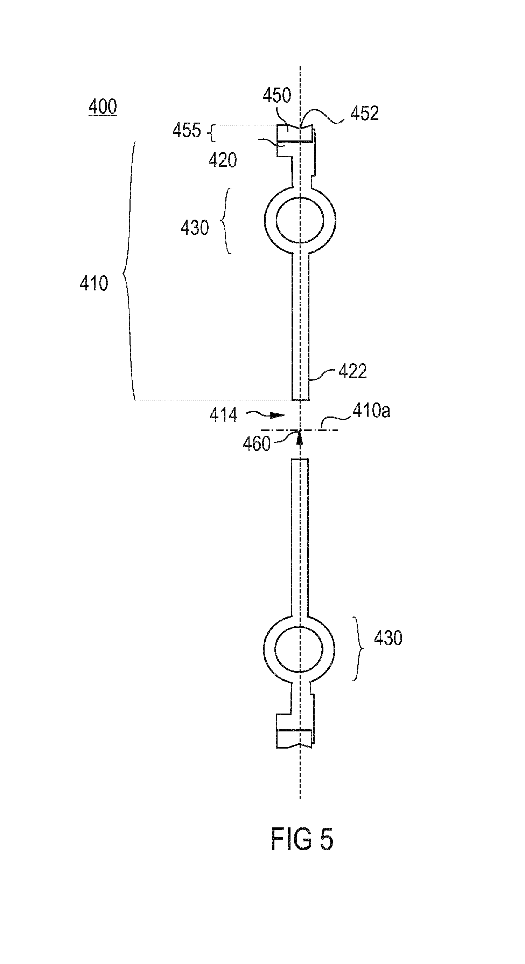

Figs. 3 to 5 show exemplary embodiments of the pulley as described herein, wherein the structure 430 is formed by different geometrical structures. In Fig. 3 an exemplary embodiment of a pulley is shown in which the structure configured for providing a lower radial stiffness of the wheel portion is a U-type structure. Fig. 4 shows an exemplary embodiment in which the structure configured for providing a lower radial stiffness of the wheel portion is a S-type structure. Further, Fig. 5 illustrates an exemplary embodiment, in which the structure configured for providing a lower radial stiffness of the wheel portion is a O-type structure. By providing a pulley with a geometrical structure configured for providing a lower radial stiffness of the wheel portion compared to the stiffness of the wheel portion in axial direction an easy producible pulley for smoother spinning and reduction of wire vibrations is provided.

According to embodiments which can be combined with other embodiments described herein geometrical structures configured for providing a lower radial stiffness of a wheel portion compared to the axial stiffness of the wheel portion, such as the U-type structure, S-type structure, and O-type structure as shown in Figs. 3 to 5, may be combined with a foam-like structure. Such a combination of the geometrical structure configured for providing a low radial stiffness with a foam-like structure can for example be realized by providing the geometrical structure with a foam-like structure (i.e. the geometrical structure includes the foam-like structure). Alternatively, the combination of the geometrical structure configured for providing a low radial stiffness with a foam-like structure 430a can be realized by providing the foam- like structure in the wheel portion at a location which is in relation to the radial location of geometrical structure 430b at a radially more outer location than the geometrical structure, as exemplarily shown in Fig. 4.

Although, the combination of foam-like structure and geometrical structure configured for providing a lower radial stiffness is exemplarily described in connection with the S-type structure as shown in Fig. 4; it is to be understood that according to embodiments described herein the foam like structure can also be combined with the other geometrical structures, such as the U-type structure or the O-type structure as exemplarily shown in Figs. 3 or 5, respectively. According to further optional embodiments, which can be combined with other embodiments described herein, the foam-like structure in the wheel portion can be provided at a radial location which is in relation to the radial location of geometrical structure 430b at a radially more inner location than the geometrical structure,

According to some embodiments, which can be combined with other embodiments described herein, the structure configured for providing a lower radial stiffness of the wheel portion of the pulley compared to the axial stiffness of the wheel portion of the pulley includes damping properties for damping loads, particularly load variations, acting on the wire. According to embodiments, the structure configured for providing a lower radial stiffness may include a damping coefficient zeta (ζ) having a value between a lower limit of zeta = 0.01, particularly of zeta = 0.1, more particularly of zeta = 0.2 and an upper limit of zeta = 0.5, particularly of zeta = 1.0, more particularly of zeta = 1.5. Accordingly, a pulley for smoother spinning and reduction of wire vibrations is provided.

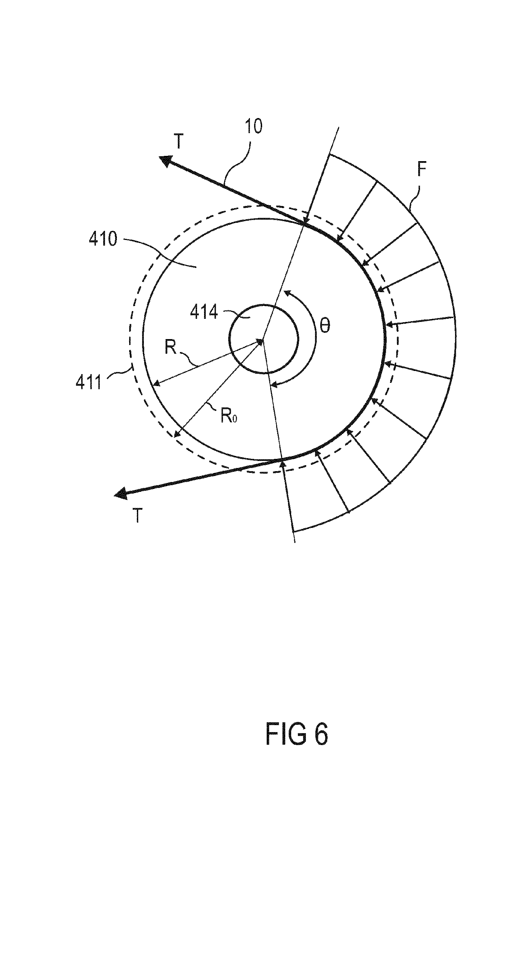

In Fig. 6 a pulley according to embodiments described herein is shown in a loaded state, for example when a wire 10 exerts a radial force F on the pulley which is generated by a wire tension T. The dotted line indicated by reference number 411 in Fig. 6 illustrates the radius R₀ of the pulley when the pulley is in an unloaded state, particularly when the wire 10 does not exert a radial force F on the pulley, for example when the wire is not tensioned.

With exemplary reference to Fig. 6, according to embodiments, the radial force F acting on the pulley is generated by the wire 10 wrapped on the pulley with a wrapping angle theta (θ), when the wire is tensioned by a wire tension T. According to embodiments which can be combined with other embodiments described herein, in a loaded state the pulley may have a radius R which is less than the radius R₀ in an unloaded state of the pulley. According to embodiments described herein, the radius R₀ of the pulley in an unloaded state may be between a lower limit of R₀ = 35 mm, particularly of R₀ = 50 mm, particularly of R₀ = 75 mm and a upper limit of R₀ = 100 mm, particularly of R₀ = 125 mm, particularly of R₀ = 150 mm. According to embodiments, the pulley may be configured for radial contraction ΔR = R₀ - R due to the radial force F acting on the pulley generated by the wire tension. According to embodiments described herein, the wire tension T can be between a lower limit of T = 5 N, particularly T = 10 N, particularly T = 15 N and an upper limit of T = 15 N, particularly T = 25 N, particularly T = 35 N. For example, the wire tension T can be T = 28 N for a wire having a diameter of 120 µm. According to other examples, the wire tension can be T =20 N for a wire having a diameter of 100 µm, the wire tension can be T =12 N for a wire having a diameter of 80 µm, the wire tension can be T =8 N for a wire having a diameter of 70 µm, and the wire tension can be T =6 N for a wire having a diameter of 60 µm.

With exemplary reference to Fig. 6, according to embodiments described herein, in an unloaded state the wire length L0 wrapped on the pulley corresponds to L₀ = θ·R₀, with θ in radian. As outlined above, according to embodiments described herein, the pulley may contract in radial direction by ΔR = R0 - R when the wire wrapped on the pulley is under tension. Accordingly, the wire length L wrapped on the pulley in a loaded state of the pulley corresponds to L = θ·R, with θ in radian. Consequently, the difference of the wire length ΔL wrapped on the pulley between the unloaded state and the loaded state of the pulley corresponds to ΔL= L₀ - L = θ(R₀ - R). The wrapping angle theta (θ) can be between a lower limit of theta (θ)=90°, particularly theta (θ)=105°, particularly theta (θ)=120° and an upper limit of theta (θ)=150°, particularly theta (θ)=180°, particularly theta (θ)=270°.

According to embodiments which can be combined with other embodiments described herein, the pulley, particularly the wheel portion of the pulley may have an apparent radial stiffness which is defined as kₐₚ = T/ ΔL. According to embodiments, for an wrapping angle of θ = 180° the apparent radial stiffness kₐₚ of the pulley, particularly of the wheel portion of the pulley , is kₐₚ< 100 N/mm, particularly kₐₚ< 10 N/mm, more particularly kₐₚ< 1 N/mm. Accordingly, a pulley for smoother spinning and reduction of wire vibrations is provided.

According to embodiments described herein, the pulley is made of a plastic material, particularly a thermoplastic or thermoplastic elastomer. By providing a pulley made of a plastic material a low cost pulley which can easily be manufactured, for example by injection molding, is provided.

In embodiments in which the pulley is made of a thermoplastic, the thermoplastic is at least one selected from the group consisting of: Acrylnitirl-Butadien-Styrol (ABS), Polyamide (PA), Polylactat (PLA), Polymethylmethacrylat (PMMA), Polycarbonat (PC), Polyethylenterephthalat (PET), Polyethylen (PE), Polypropylen (PP), Polystyrol (PS), Polyetheretherketon (PEEK), and Polyvinylchlorid (PVC). Alternatively, in embodiments in which the pulley is made of a thermoplastic elastomer, the thermoplastic elastomer is at least one selected from the group consisting of: polyamide, thermoplastic polyurethane (TPU), thermoplastic copolyester, thermoplastic polyamides, elastomeric alloys (TPE-v or TPV), Polyolefin blends (TPE-o) and styrenic block copolymer (TPE-s). Accordingly, a pulley is provided which can easily be manufactured for example by injection molding.

According to some embodiments, for example, 3 to 10, typically 6 to 8 openings 412 can be provided in the wheel portion. Providing openings 412 in the wheel portion of a the pulley may reduce the moment of inertia. According to some embodiments,which can be combined with other embodiments described herein, the plastic material has a density of 2.5 g/cm³ or less, for example of 2.0 g/cm³ or less. According to further optional modification, the plastic material density can be 1.5 g/cm³ or less, for example from 1.0 g/cm³ to 1.5 g/cm³. Accordingly, as a further alternative or optional aspects the moment of inertia can be 5.0*10⁻⁴ kg*m² or less, particularly 3.5*10⁻⁴ kg*m² or less; and/or the weight per diameter can be 730 g/m or less, typically 500 g/m or less, more typically from 300 to 500 g/m. This can result in a reduced wire breakage probability, especially during stop or emergency stop of the wire saw device, during which the inertia of pulleys might generate additional tension on a wire.

In light of the above, the weight of the pulleys can, for example be reduced by 30% to 60% as compared to aluminum pulleys. According to some embodiments, the electrically conduciveness can be provided by electrically conductive fibers such as carbon fibers which are embedded in the plastic material. For example carbon fiber charged polyamide can be used.

According to further embodiments, which can be combined with other embodiments described herein, the plastic material included in the pulley can be resistant to polyethylene glycol, water based coolants adapted for sawing in a wire saw device, e.g. with diamond wire, and/or combinations thereof.

Common pulleys for guiding the wire through a wire saw device are made out of metal, for example aluminum, so that they provide conductivity for a wire break detection system. Aluminum pulleys have a comparably low mass as compared to other metal pulleys. The further increasing demand for faster cutting, thinner wires, faster wire break detection and new types of wires, for example diamond wires, bring the desire for even further improvements. According to embodiments described herein, pulleys are made of an electrically conductive plastic material. Accordingly, the mass and, thus, the moment of inertia can be further reduced, electrical conductivity for wire breakage detection can be provided and a deformation of the wire during maintenance and/or operation can also be reduced. Accordingly, a lower moment of inertia and smoother spinning can be provided while being capable of having a wire break detection current flowing through the pulley.

According to embodiments, which can be combined with other embodiments described herein, the pulley includes electrically conductive plastic material. For example, the wheel portion of the pulley may include an electrically conductive plastic. According to some embodiments, the electrically conductive plastic material is an electrically conductive thermoplastic or thermoplastic elastomer. The material properties of the electrically conductive plastic material allow for a further reduction of the weight by providing a wheel portion with spokes or wheel portion openings for reducing the overall weight of the pulley.

According to further embodiments, which can be combined with other embodiments described herein, the plastic material is a synthetic polymeric material including fibers, particularly electrically conductive fibers. For example, the electrically conductive fibers can be carbon fibers. The carbon fibers may also increase the stiffness of the pulley or the wheel portion, respectively.

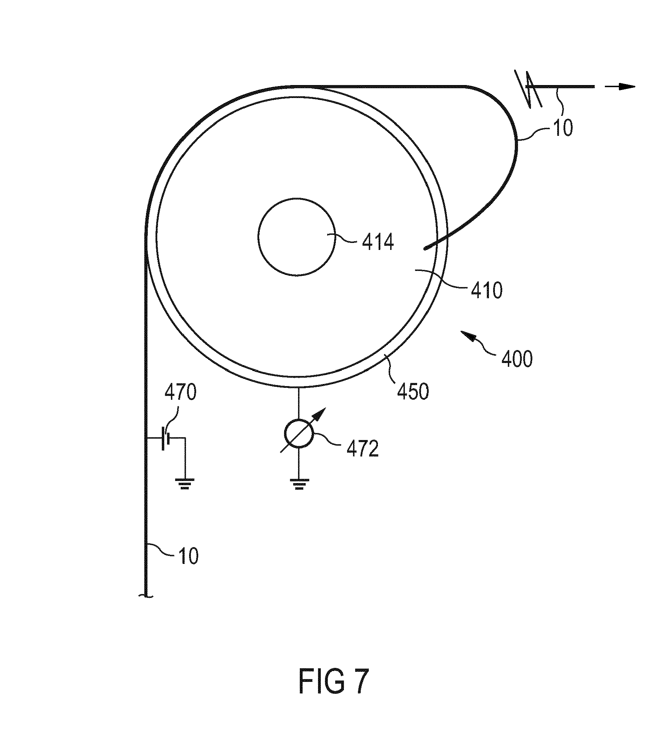

According to embodiments which can be combined with other embodiments described herein, the tire 450 as exemplarily shown in FIGS. 1B, and 2 to 5 can be made of an insulating material. Since the tire 450 is electrically insulating, the wire 10, which can be biased to a potential as exemplarily shown in FIG. 7, is electrically insulated from the wheel portion 410. In a case in which the wire is biased by a power supply 470, as shown in FIG. 7, and the loose end of the wire 10 touches the pulley at the wheel portion 410 after breakage, which is indicated in FIG. 7, a current can be detected by a measurement device 472.

According to some embodiments which can be combined with other embodiments described herein, the center of mass can be located in the wire guiding plain. In FIG. 1B this is indicated by arrow 460 symbolizing a weighing scale. Since the center of mass is in the wire guiding plain the pulley 400, which would be supported on a pivot point 460 as exemplarily shown in FIG. 1B, is balanced. According to some further embodiments, which can be combined with other embodiments described herein, the wheel portion may have protrusions 422 or recesses (not shown) such that the pulley 400 is fully balanced with respect to the wire guiding plane in which the wire is guided. For example, the protrusion 422 can compensate for the tire carrying portion 420.

According to embodiments described herein, the edges of the openings 412, the edges of the tire receiving portions and other structures, for example protrusion and recess in the pulley can be rounded or have rounded edges with a radius of curvature of several mm, e.g., at least 1 mm or 2 mm to 5 mm. This may further reduce the weight and might improve the pulley behavior during fast spinning. Additionally, slurry, cooling fluid, or other solid particles from the process cannot sediment at the pulleys as compared to a corresponding shape having sharp edges.

According to some embodiments, which can be combined with other embodiments described herein, with exemplarily reference to FIG. 2, the bearing receiving portion 414 may be configured to provide a shaft inset for coupling the pulley to a shaft. As a further option, as exemplary shown in FIG. 2, an alignment opening 416 for aligning the pulley with a shaft axis onto which the pulley is to be mounted can be provided.

As described above, the pulleys according to embodiments described herein embodiments of pulleys described herein are adapted or configured for wire saw devices, they can be used in wire saw devices and/or can be a part of a wire saw device. The pulley can have a groove structure which is made to guide a wire with a thickness of 150 µm or below, or a thickness of any of the other diameters mentioned above. It has to be noted that the groove structure is designed especially for the wire diameter and the cutting process in order to allow for high precision cutting, e.g. with a precision of 100 µm or below, or even of 50 µm or below.

In light of the above, smooth spinning can be further improved and the probability for vibrations can also be reduced. The manufacturing of the pulley from plastic material such as plastic material being formed in a mold, allows for optimized design and balance of the pulley and reducing manufacturing costs.

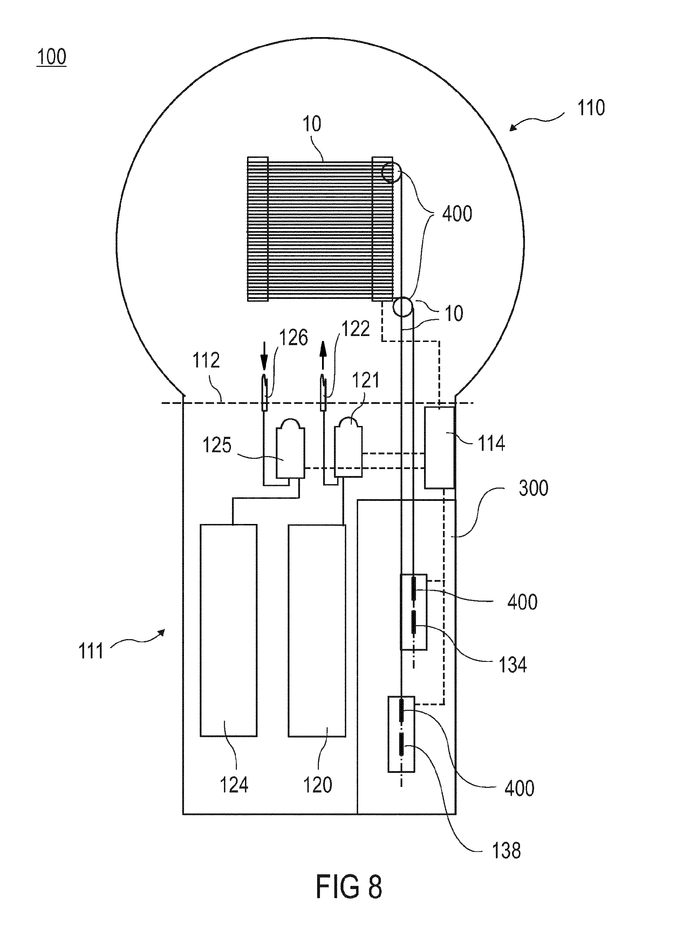

FIG. 8 shows an exemplary embodiment of a wire saw device 100 according to embodiments as described herein. The housing of the wire saw device can be separated into different areas as indicated by the dotted line 112. For example, a first housing portion may form a wire web compartment 110 and a second housing portion 111 may house a wire management system 300, an electrical cabinet 114, a first tank 120 and a second tank 124 as well as a first pump 121 and a second pump 125. The wire management system may be configured for feeding the wire 10 towards the wire web.

As exemplarily shown in Fig. 8, the wire can be guided over pulleys 400 to form a wire web. As can be seen from the wire web formed by the wire 10 in the wire web compartment 110, the system shown in FIG. 8 can be used to slice wafers. The wire that is used for sawing can be provided with an abrasive material. As one option, the abrasive material can be provided as a slurry. This may be done shortly before the wire touches the material to be cut. Accordingly, the abrasive is carried to the cutting position by the wire for cutting the material. As another option, the abrasive can be provided on the wire with a coating. For example, diamond particles can be provided on a metal wire, e.g. with a coating, wherein the diamond particles are imbedded in the coating of the wire. Accordingly, the abrasive is firmly connected with the wire.

According to some embodiments of the wire saw device, a first tank 120 can be used for unused cooling fluid, e.g. in the case where the wire saw device is operated with diamond wire, or can be used e.g. for unused (fresh) slurry, in the case where the wire saw device 100 is operated with a wire and additional abrasive. The first pump 121 pumps the cooling fluid (or slurry, respectively) towards the desired position in the cutting area. This is indicated in FIG. 8 by conduit 122. The used cooling fluid (or slurry) may flow back through conduit 126 and is pumped by the second pump 125 into the second tank 124. In those cases where cooling fluid or slurry is used, a portion of the used consumable fluid can be re-used if it is reinserted into the first tank 120. Thus, according to different embodiments only a portion of the consumable fluid, all of the consumable fluid or none of the consumable fluid may be reused and, thus, be reinserted in the first tank 120. As one example, an additional valve might be provided in conduit 126 for selectively choosing the tank into which the used fluid is pumped. According to another example, a fluid connection between the second tank 124 and the first tank 120 can be provided in order to reinsert a portion of the used fluid in the first tank 120. According to different embodiments, as already described above, the consumable fluid can be cooling fluid or slurry. In case that slurry is used, the slurry also takes over the function of cooling the position, at which the wire cuts the material.

As indicated by the dotted lines in FIG. 8 the electrical cabinet 114 may serve to control the operation of the different components. For example, operation of the first pump 121 and the second pump 125, rotation of the supply spool 134 and take-up spool 138 can be controlled. Further, additionally or optionally, the filling level of the first tank 120 and second tank 124 can be measured and respective signals can be fed to the control unit. According to further embodiments, other control signals and monitoring signals can be fed to and from the electrical cabinet 114. For example signals from the motors driving the spools, pressure signals for feeding the consumable fluids like slurry or cooling fluid, or a wire break detection signal can be fed to and from the electrical cabinet. An electrical cabinet 114 integrated in a wire saw device 100 is shown in FIG. 8. It is apparent to a person skilled in the art that an electrical cabinet or a control unit can be provided at a different location in the wire saw device, e.g., also external of the wire device, and corresponding control signals from and to the control unit can be provided accordingly.

According to some embodiments, which can be combined with other embodiments described herein, the wire is provided on a supply spool 134. As exemplarily shown in Fig. 8, according to embodiments the wire is guided over a plurality of pulleys 400 into the wire web compartment 110 for forming the wire web in the cutting area. After cutting, the wire is guided by a further pulley towards the wire management system 300 and is therein provided over pulleys on the take-up spool 138. According to embodiments, the wire is guided from the wire management system 300 to the wire cutting area and back with a wire speed of 10 m/s or higher, typically in a range of 15 to 20 m/s or even up to 25 m/s or 40 m/s.

According to further embodiments, which can be combined with other embodiments described herein, the wire management system 300 can be adapted for bi-directional use, such that in one direction the wire is fed from the supply spool 134 to the take-up spool 138 and in a further direction, vice versa. The bi-directional use of the wire saw device may be of particular interest if diamond wire is used.

According to different embodiments, a wire saw device can be a cropper, a squarer, a wire saw or a multiple wire saw. A cropper is to be understood as a device, which can be used to saw end pieces from bricks or blocks, which have been separated into bricks in a squarer. A squarer is a wire saw that saws the silicon ingot into squares of the desired size such that a wire saw or a multiple wire saw can saw wafers from the bricks in a wafering process. The wire management system herein is particularly useful for the wire saw device being a squarer, but not limited to a squarer.

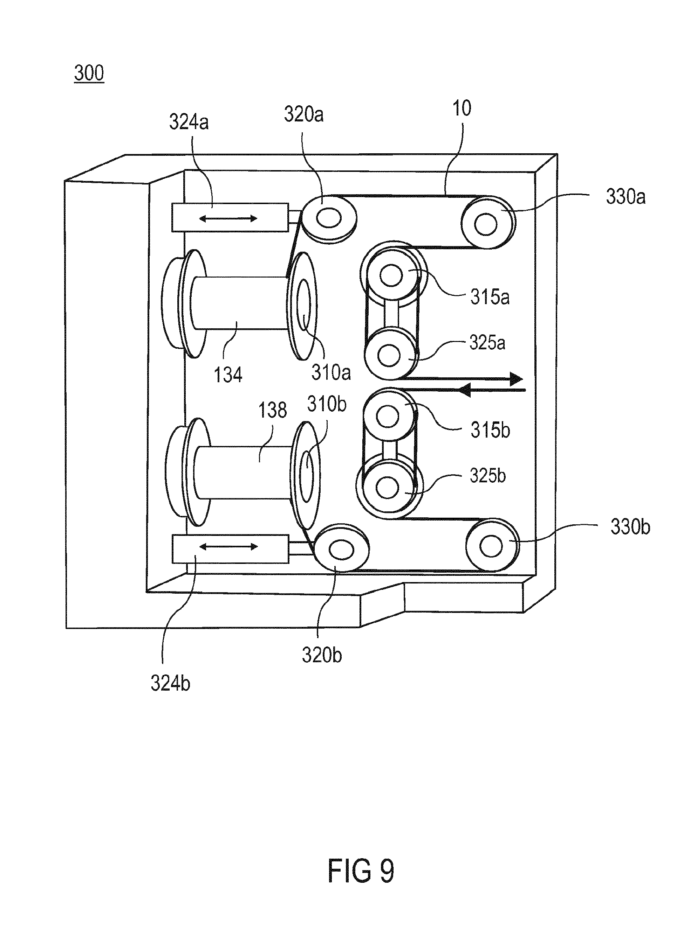

FIG.9 shows a perspective view of a wire management system 300 according to embodiments, in which embodiments of the pulley as described herein may be employed. The exemplary embodiment of FIG. 9 includes a supply spool 134, mounted on spool shaft 310a, and the pulleys 320a, 330a, 315a and 325a are arranged to guide the wire, particularly to the wire web compartment. According to an exemplary embodiment of the wire management system as shown in FIG.9, a take-up spool 138 mounted on spool shaft 310b may be provided the pulleys 320b, 330b, 315b and 325b are arranged to guide the wire from the wire web compartment to the take-up spool 138.

Further, as exemplarily shown in FIG 9, the wire management system may include a pulley moving device 324a which is configured for positioning the pulley 320a at a desired position over the supply spool 134. Accordingly, the wire management system may include a further pulley moving device 324b which is configured for positioning the pulley 320b at a desired position over the take-up spool 138. The pulley moving device 324a, 324b can be configured as a retractable or telescopic bar. The retractable or telescopic bar can be longitudinally movable along a bar axis parallel to the spool axis. As exemplarily shown in FIG. 9 the pulley moving device 324a, 324b can be mounted to a wall portion of a main frame portion of the wire saw device.

According to embodiments, a wire saw may include at least one pulley, particularly a plurality of pulleys, for example all pulleys, according to embodiments of the pulley as described herein. The pulleys and the wire saw device according to embodiments described herein are particularly useful if thin wires or wires with a coating, e.g. a diamond coating, are used. Accordingly, in embodiments, which can be combined with other embodiments described herein, the wire management system and wire saw devices described herein are adapted for thin wires having a diameter below about 150 µm, such as diameters between about 100 µm and about 150 µm, particularly between about 50 µm and about 150 µm, more particularly between 50 µm and 100 µm, for example 120 µm. In other cases embodiments may also have a wire diameter as low as for example 100 µm, 80 µm, 70 µm or 60 µm.

Further, the wire management system and wire saw devices described herein are adapted for coated wires, for example a wire having a nickel coating with diamond particles embedded therein. Such wires may have a diameter of below about 150 µm, such as diameters between about 100 µm and about 150 µm, particularly between about 50 µm and about 150 µm, more particularly between 50 µm and 100 µm, for example 120 µm. In other cases embodiments may also have a wire diameter as low as for example 100 µm, 80 µm, 70 µm or 60 µm. For those wires a twisting of the wire might increase the risk of breaking of the wire or of damaging the coating, so that a twist-free operation is advantageous. By using diamond wire, the throughput may be increased by a factor of 2 or even more. When a diamond wire is used, further parts of the wire saw may be adapted to the diamond wire. For example, mechanical parts, electrical parts and/or software may be adapted to the use of diamond wire. When a diamond wire is used, further parts of the wire saw may be adapted to the diamond wire. For example, mechanical parts, electrical parts and / or software may be adapted to the use of diamond wire.

As described above, a plurality of pulleys are used in a wire saw devices described herein. In this regard, it has to be taken into account that there is the desire for higher cutting speeds and, higher wire speeds, thinner wires or different types of wires, such as diamond wires, and improved device control at the facility of the customer. During sawing operation the pulleys may rotate with rotation speeds of more than 1500 rpm around their respective axes. According to some embodiments, the pulleys are adapted for wire saw devices by being capable of rotation speeds of 2000 rpm and more, or even 3000 rpm or more, e.g., 2000 rpm to 4000 rpm. For example, during an emergency stop the wire saw device needs to be stopped as fast as possible. Accordingly, the inertia of the pulleys, that is the moment of inertia of the pulleys, result in the pulleys rotation not to stop immediately. This further pulley rotation may result in a harmful tension on the wire such that wire breakage may occur.

Further, according to some embodiments, which can be combined with other embodiments described herein, such a wire breakage can be detected as follows. The wire is biased to the potential having an absolute value of about 20 V to 120 V, such as 30 V to 60 V. Accordingly, a voltage between the wire and remaining wire saw device components such as the housing, the mainframe, the police, housing portions, or doors of cabinets, and the like is generated. For example, these further components can be on ground potential. If the wire breaks, the loose end of the wire touches one of the components of the wire saw device, for example a pulley including electrically conductive plastic material as described herein. The voltage between the wire and the wire saw device results in a current. Accordingly, a wire breakage detection system can monitor the existence of such a current and detect the breakage of the wire if such a current is detected.

According to embodiments described herein, a wire saw device with at least one pulley according to any of the embodiments described above is provided. According to one optional aspect, a plurality of pulleys employed in the wire saw have essentially the same moment of inertia. For example, the moment of inertia of the pulleys may not deviate from each other more than 10 % or more than 5 %. Typically, according to different implementations, the wire saw device can be an element selected from the group consisting of: a wire saw, a multiple wire saw, a squarer, and a cropper. According to further embodiments, which can be combined with other embodiments described herein, the wire saw device can further include a main body of the wire saw device, a voltage supply adapted for biasing the wire on an electrical potential and an electrical conductive path from the wheel portion of the pulley to the main body. Accordingly, some embodiments of the wire saw device as described herein are configured for wire break detection as described above.

While the foregoing is directed to embodiments of the disclosure, other and further embodiments of the disclosure may be devised without departing from the basic scope thereof, and the scope thereof is determined by the claims that follow.

## Claims

1. A pulley (400) configured for a wire saw device having a wire forming a wire web, comprising:
- a wheel portion (410) around the pulley axis (410a), and
- a wire guiding portion (455) radially outward of the wheel portion for guiding the wire, wherein a radial stiffness of the wheel portion is lower than a stiffness of the wheel portion in direction of the pulley axis.

2. The pulley (400) according to claim 1, wherein the wheel portion comprises a structure (430) configured for providing the lower radial stiffness which is arranged at a radially outer portion of the wheel portion (410).

3. The pulley (400) according to claims 1 or 2, wherein the structure (430) configured for providing the lower radial stiffness is an integral part of the pulley, particularly of the wheel portion.

4. The pulley (400) according to any of claims 1 to 3, wherein the structure (430) for providing the lower radial stiffness is at least one structure selected from the group consisting of: an S-type structure, a U-type structure, an O-type structure or a foam-like structure.

5. The pulley (400) according to any of claims 1 to 4, wherein the structure (430) configured for providing the lower radial stiffness comprises an apparent radial stiffness kₐₚ of kₐₚ< 100 N/mm, particularly of kₐₚ< 10 N/mm, more particularly of kₐₚ< 1 N/mm, wherein the apparent radial stiffness is defined as kₐₚ = T/ [theta (θ) (R₀ - R)], wherein T is a wire tension, wherein theta (θ) is a wrapping angle of the wire wrapped on the pulley, wherein R₀ is a radius of the pulley in an unloaded state, and wherein R is a radius of the pulley in a loaded state.

6. The pulley (400) according to any of claims 1 to 5, wherein the structure (430) configured for providing the lower radial stiffness further comprises damping properties for damping loads acting on the wire, particularly wherein the structure configured for providing the lower radial stiffness comprises a damping coefficient zeta (ζ) having a value between a lower limit of zeta = 0.01, particularly of zeta = 0.1, more particularly of zeta = 0.2 and an upper limit of zeta = 0.5, particularly of zeta = 1.0, more particularly of zeta = 1.5.

7. The pulley (400) according to any of claims 1 to 6, wherein the pulley is made of a plastic material, particularly a thermoplastic or thermoplastic elastomer.

8. The pulley (400) according to claim 7, wherein the thermoplastic is at least one selected from the group consisting of: Acrylnitirl-Butadien-Styrol (ABS), Polyamide (PA), Polylactat (PLA), Polymethylmethacrylat (PMMA), Polycarbonat (PC), Polyethylenterephthalat (PET), Polyethylen (PE), Polypropylen (PP), Polystyrol (PS), Polyetheretherketon (PEEK), and Polyvinylchlorid (PVC).

9. The pulley (400) according to claim 7, wherein the thermoplastic elastomer is at least one selected from the group consisting of: polyamide, thermoplastic polyurethane (TPU), thermoplastic copolyester, thermoplastic polyamides, elastomeric alloys (TPE-v or TPV), Polyolefin blends (TPE-o) and styrenic block copolymer (TPE-s).

10. The pulley(400) according to any of claims 7 to 9, wherein the plastic material comprises an electrically conductive plastic material, particularly wherein the plastic material includes electrically conductive fibers.

11. The pulley (400) according to any of claims 1 to 10, wherein the moment of inertia of the pulley is 5.0*10⁻⁴ kg*m² or less, typically 3.5*10⁻⁴ kg*m² or less.

12. The pulley (400) according to any of claims 1 to 11, wherein the pulley is an injection molded pulley.

13. A wire saw device (100) for cutting semiconductor material having a wire forming a wire web, wherein the wire saw device comprises at least one pulley according to claims 1 to 12, particularly wherein the wire saw device (100) further comprises: a main body of the wire saw device; a voltage supply adapted for biasing the wire on an electrical potential; and an electrical conductive path from the wheel portion of the pulley to the main body.

14. Use of the pulley (400) according to any of claims 1 to 12 in a wire saw device.

15. The pulley (400) according to claim 1, wherein the wheel portion comprises a structure (430) configured for providing the lower radial stiffness which is arranged at a radially outer portion of the wheel portion (410),
wherein the structure (430) configured for providing the lower radial stiffness is an integral part of the pulley, particularly of the wheel portion,
wherein the structure for providing the lower radial stiffness is at least one structure selected from the group consisting of: an S-type structure, a U-type structure, a O-type structure or a foam-like structure,
wherein the pulley is made of a plastic material, particularly a thermoplastic or thermoplastic elastomer.
